# EUROPEAN PATENT SPECIFICATION

(11) **EP 3 284 943 B1**
(45) Date of publication and mention of the grant of the patent: **14.07.2021**
(21) Application number: 17186611.4
(22) Date of filing: 17.08.2017
(51) Int. Cl.: F02K 3/062, F02C 3/10

(54) **GAS GENERATOR BIFURCATING EXHAUST DUCT TO FREE TURBINE**
VERZWEIGTE GASGENERATORABGASLEITUNG AN EINE FREIE TURBINE
CONDUIT D'ÉCHAPPEMENT À BIFURCATION DE GÉNÉRATEUR DE GAZ POUR TURBINE LIBRE

(30) Priority: 17.08.2016 US 201615239086
(43) Date of publication of application: 21.02.2018
(73) Proprietor: Raytheon Technologies Corporation, Farmington, CT 06032 (US)
(72) Inventor: CHANDLER, Jesse M., South Windsor, CT 06074 (US); SUCIU, Gabriel L., Glastonbury, CT 06033 (US)
(74) Representative: Dehns

(56) References cited:
- EP-A1- 2 966 266
- EP-A2- 2 202 152
- WO-A2-2015/134081
- US-A1- 2012 128 487

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-energy exhaust gas flow expands through the turbine section to drive the compressor and the fan section.

A speed reduction device such as an epicyclical gear assembly driven by a core engine enables alternative placement of the gas turbine engine. The core components of the gas turbine engine such as the compressor, combustor and turbine can be imbedded within the aircraft body. A fan section may then be mounted in alternate locations such as at the rear of the aircraft body. In such a configuration the fan is aft of the core engine components and exhaust gases flow past the fan. It is not desirable to ingest the hot exhaust gases into the fan.

WO 2015/134081, EP 2 966 266 A1 and US 2012/128487 A1 disclose prior art aircraft propulsion systems.

### SUMMARY

According to the invention, there is provided an aircraft according to claim 1.

In an embodiment according to the previous embodiment, the free turbine includes a radial inflow turbine and the outlet of the exhaust duct is disposed transverse to the radial inflow turbine to direct exhaust gas flow radially into the radial inflow turbine.

In another embodiment according to any of the previous embodiments, the gear system is configured to drive the propulsor section at a speed different than that of the free turbine.

In another embodiment according to the first embodiment, the free turbine includes an axial inflow turbine and the outlet is disposed aft of the propulsor and forward of the axial inflow turbine.

In another embodiment according to the previous embodiment, the exhaust duct includes an inflow section that communicates exhaust gases to the outlet, and the outlet is annular and surrounds the shaft.

In another embodiment according to any of the previous embodiments, the exhaust duct includes a turning portion that turns exhaust gas flow radially inward to the free turbine.

In another embodiment according to the previous embodiment, the aircraft includes a bifurcation that extends through a flow path of the propulsor and the turning portion is disposed within the bifurcation.

In another embodiment according to any of the previous embodiments, the core engine is angled outward relative to a longitudinal axis of the aircraft.

In another embodiment according to any of the previous embodiments, the core engine includes a first core engine and a second core engine disposed within the aircraft and the propulsor section includes a first propulsor driven by the first core engine and a second propulsor driven by the second core engine.

In another embodiment according to the previous embodiment, the first core engine and the second core engine are each angled outward relative to a longitudinal axis of the aircraft.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft including a partially embedded propulsion system.
Figure 2 is an aft view of the example aircraft including the partially embedded propulsion system.
Figure 3 is a schematic side view of the example embedded propulsion system.
Figure 4 is a schematic illustration of an example core engine.
Figure 5 is a schematic illustration of an orientation of core engines disposed within the example aircraft.
Figure 6 is a schematic view of a free turbine embodiment.
Figure 7 is a schematic view of the free turbine of Figure 6.
Figure 8 is an aft view of an example propulsor.
Figure 9 is an aft view of another free turbine embodiment.
Figure 10 is an aft view of the free turbine of Figure 9.

### DETAILED DESCRIPTION

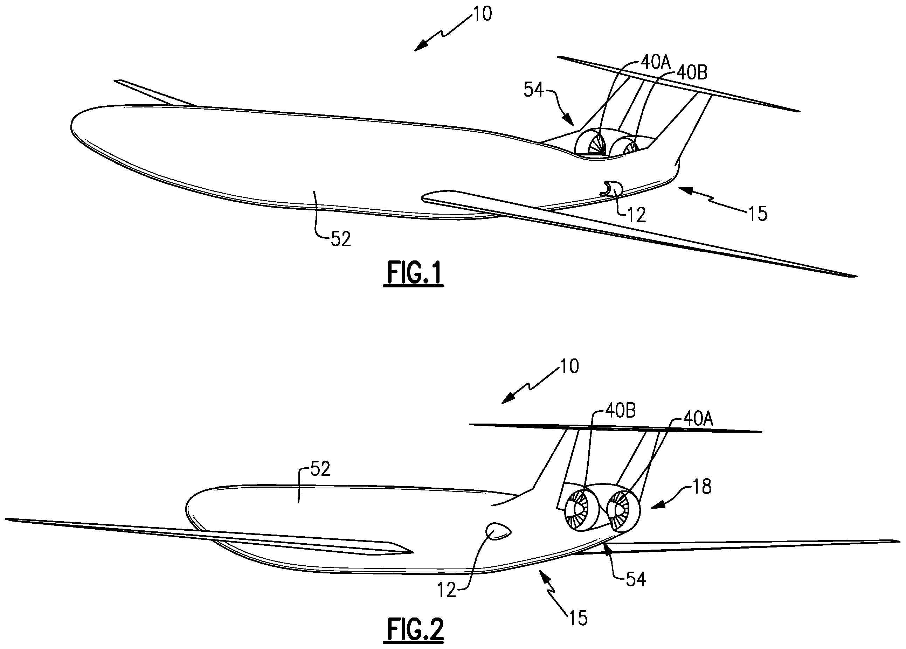

Figures 1, 2 and 3 schematically illustrate an aircraft 10 that includes an embedded propulsion system 15. The example propulsion system 15 includes a core engine 16 and a propulsor 18.

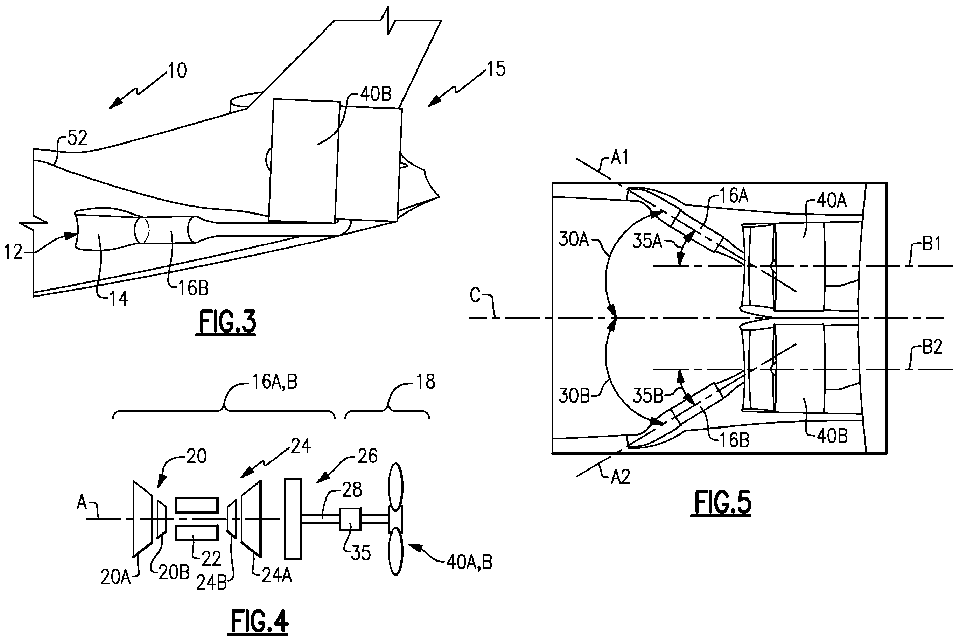

Referring to Figures 4 and 5 with continued reference to Figures 1, 2 and 3, the example propulsor 18 includes two fans 40A, 40B disposed at the aft portion 54 of the aircraft fuselage 52. The disclosed example includes two core engines 16A, 16B (Figure 3) also referred to a gas generators that are embedded within the aircraft fuselage 52. The core engines 16A, 16B drive the two fans 40A, 40B disposed at the aft portion 54 of the aircraft fuselage 52. The core engines 16A, 16B are fed air through an air intake opening 12 and then through an internal inlet 14. The inlet 14 communicates the required air through the fuselage 52 to the core engines 16A, 16B.

Each of the example core engines 16A, 16B include at least one compressor section 20 that compresses incoming air and supplies that air to a combustor 22. In the combustor 22, gas is mixed with the air and ignited to generate a high energy exhaust flow that is expanded through at the turbine section 24.

In one disclosed example embodiment schematically shown in Figure 4, the core engines 16A, 16B comprise a two-spool engine where a first spool includes a first compressor section 20A coupled to a first turbine section 24A and a second spool including a second compressor section 20B coupled to a second turbine section 24B. Each of the example core engines 16A, 16B drive a free turbine 26 that is driven by exhaust gases expelled from the turbine section 24. The free turbine 26 is not driven by a shaft from the corresponding core engine 16A and 16B. The free turbine 26 drives a gear system 35 through a shaft 28. The gear system 35 drives a corresponding fan 40A, 40B at a speed different than a speed of the free turbine 26. In one example embodiment, the gear system 35 provides a speed reduction that drives the corresponding fan 40A, 40B at a speed less than a speed of the corresponding free turbine 26.

The example core engines 16A and 16B are disposed at an angle 30A and 30B relative to a longitudinal axis C of the aircraft 10. The core engines 16A and 16B are also angled relative to axes B1 and B2 corresponding to the Fans 40A, 40B. The first fan 40A is disposed at an angle 35A relative to the core engine 16A. The second fan 40B is disposed at an angle 35B relative to the core engine 16B.

The core engines 16A and 16B are embedded within the aircraft fuselage 52 and are disposed substantially next to each other. The core engines 16A and 16B are angled outwardly relative to each other such that each engine is positioned outside of a burst zone of the other engine. The angled relative orientation of the core engines 16A and 16B ensure survivability of at least one engine in the event that one of the core engines 16A, 16B incurs a failure that renders it non-operational.

The fans 40A and 40B rotate about the separate axes B1, B2 that are spaced from the engine axes A1 and A2. Because the fans 40A, 40B are disposed aft of the core engines 16A, 16B, an additional drive shaft is not required to run along each engine axis. The shaft 28 through which the free turbine 26 drives the fan 40A, 40B does not need to pass through the center of the core engine 16A, 16B. Because an additional drive shaft is not needed, each of the core engines 16A, 16B may be of a reduced diameter as compared to traditional engines with a second shaft extending along the engine axis to drive a forward positioned fan. The reduced size enables improved engine operating efficiencies.

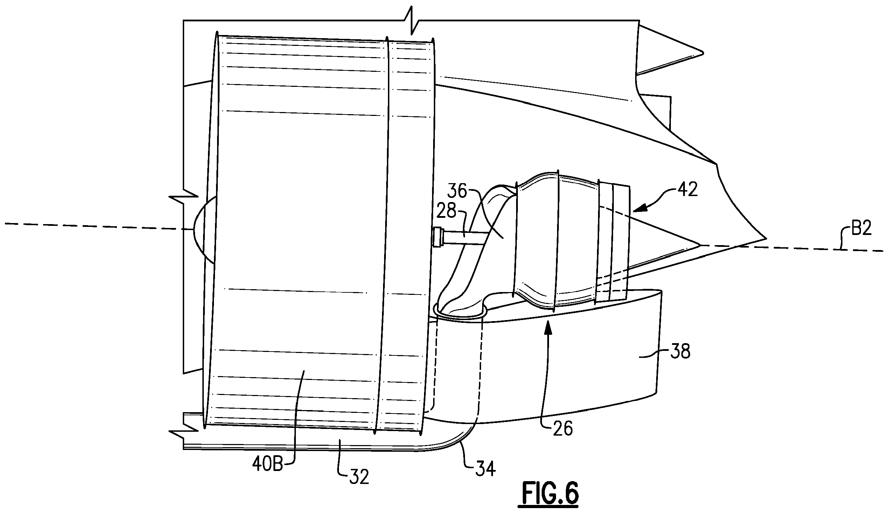

Referring to Figure 6 with continued reference to Figures 3 and 5, the example fans 40A, 40B are each driven by the separate free turbine 26. Figure 6 illustrates one free turbine 26 driving the fan 40B. Another free turbine 26 is provided to drive the other fan 40A. Each of the free turbines 26 are disposed aft of the core engine 16A, 16B and aft of the corresponding fans 40A, 40B. Each free turbine 26 drives a drive shaft 28 that in turn drives a corresponding one of the fans 40A, 40B. The drive shaft 28 is disposed along the fan axis B2. It should be understood that although the disclosed example aircraft 10 includes two core engines 16 and two fans 40, that any number of core engines may be utilized to drive one or more fans mounted within the aircraft.

The free turbine 26 is disposed aft of the fan 40B and receives gas flow through an exhaust duct 32. Gas flow provided by the core engine 16B expands through the free turbine 26 to drive the shaft 28. The exhaust duct 32 includes a turning portion 34 that is routed through a bifurcation 38. The bifurcation 38 is disposed within the propulsive flow from the fan 40B. A substantially identical configuration is provided between the core engine 16A and the free turbine 26 driving the other fan 40A.

The disclosed free turbine 26 receives exhaust gas flow about the axis B2. The turning duct 34 routes gasses through the bifurcation 38 and into an annular section 36. In the annular section 36, gas flow is turned in an axial direction along the axis B2 and wraps around the drive shaft 28. The free turbine 26 is not mechanically coupled to the corresponding core engine and is configured to rotate at speeds providing the most efficient propulsive operation of the fan 40A. Shaft speed may be modified by using a fan drive gear system 35. Exhaust gasses enter the free turbine 26 axially and exit out the free turbine exhaust 42 in an axial direction common with the axis B2.

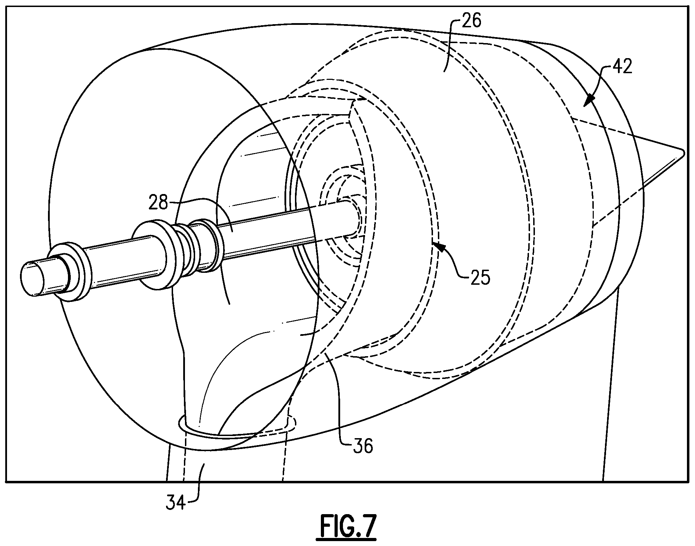

Referring to Figure 7 with continued reference to Figure 6, the example free turbine 26 receives gas flow through the annular section 36 that is communicated through the turning section 34. The annular section 36 originates at the radial inlet from the turning section 34 and wraps around the shaft 28 to form an annular outlet 25 into the free turbine 26. High energy exhaust gases from the core engine are of an elevated temperature and are therefore contained within the exhaust duct 32 and communicated through the free turbine 26. The annular section 36 isolates the shaft 28 from the high temperatures and pressures of the exhaust gas flow. Moreover, because the free turbine 26 is aft of the fan 40B, exhaust gases expelled from the free turbine 26 are advantageously not communicated through the fan 40B.

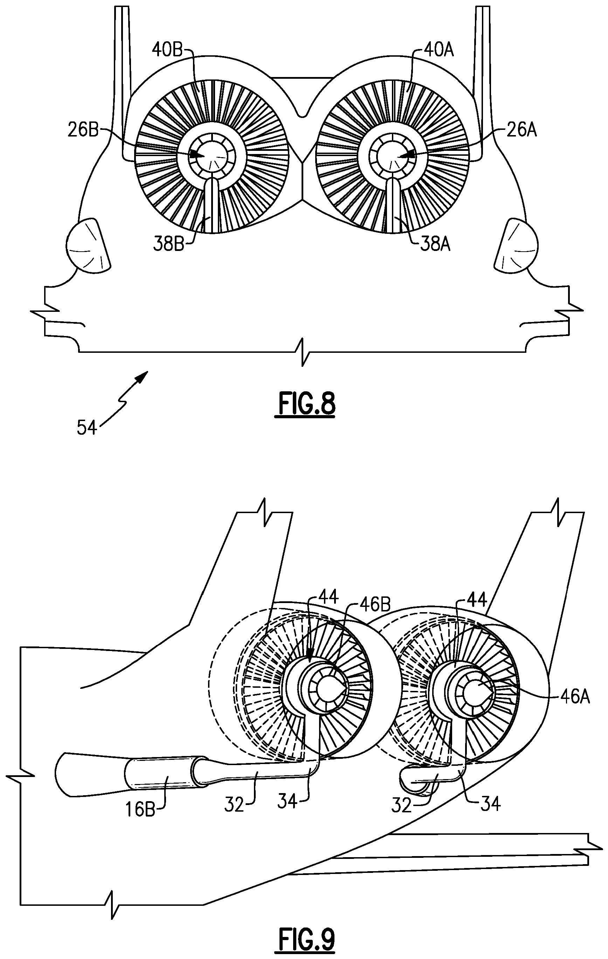

Referring to Figure 8, each of the example turning sections 34 extend through a corresponding bifurcation 38A, 38B that extend through a flow path of air driven through the corresponding fan sections 40A, 40B. The example bifurcations 38A, 38B include features that minimize disruption of air flow through each of the fan sections 40a and 40b.

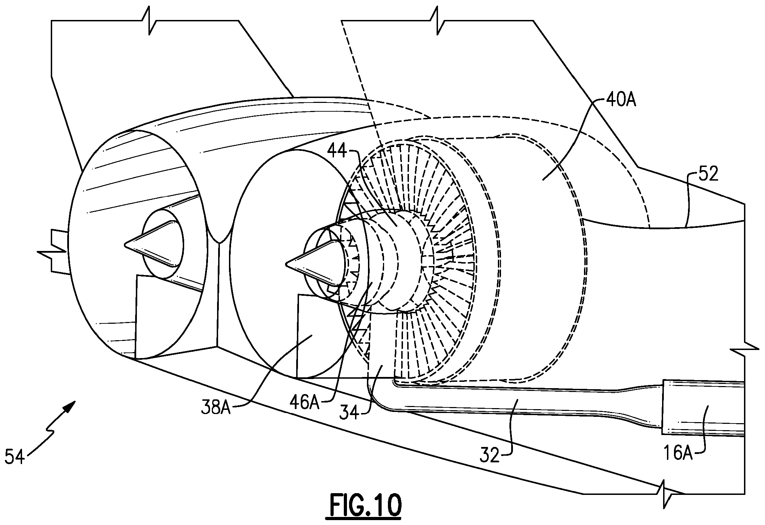

Referring to Figures 9 and 10, another example free turbine 46A and 46B is disclosed and is positioned aft of the corresponding fan 40A, 40B. The example free turbines 46A, 46B are radial turbines that receive exhaust gas flow radially through radial exhaust section 44. In this example, the exhaust duct 32 includes the turning section 34 that communicates air to the radial turbine 46A. Exhaust gas flow is not needed to be turned again axially but instead enters the free turbine 46A in a radial direction and powers the turbine section by rotating in a radial direction until it is exhausted through the aft portion of the free turbine 46A. Orientation of the radial free turbine instead of an axial free turbine enables exhaust gasses input into the radial turbine in a radial direction rather than requiring a second turning in an axial direction.

The example propulsor sections are driven by a free turbine disposed aft of each of the fan sections. Because the free turbine is provided separate from the core engine sections, the core engine sections may be smaller and more efficient. Moreover, by positioning the free turbines aft of fan sections, exhaust gasses from the free turbine do not interfere with operation of the fan section.

Although an example embodiment has been disclosed, a worker of ordinary skill in this art would recognize that certain modifications would come within the scope of this invention.

For that reason, the following claims should be studied to determine the scope and content of this invention.

## Claims

1. An aircraft (10) comprising:
a core engine assembly (16A, 16B) supported within an aircraft fuselage (52), the core engine assembly (16A, 16B) including a compressor section (20A, 20B) communicating air to a combustor section (22) where the air is mixed with fuel and ignited to generate a high-energy gas flow that is expanded through a turbine section (24A, 24B);
an air intake (12) within the aircraft fuselage (52) communicating air to the core engine assembly (16A, 16B);
a propulsor section (18) aft of the core engine assembly (16A, 16B); and
a free turbine (26; 46A, 46B) configured to be driven by gas flow from the core engine assembly (16A, 16B), wherein the free turbine (26; 46A, 46B) drives a gear system (35) through a shaft (28), and the gear system (35) drives a corresponding fan (40A, 40B), the shaft (28) disposed along a fan axis (B2) and coupled to the propulsor section (18); and
an exhaust duct (32) routing exhaust gases from the core engine assembly (16A, 16B) to the free turbine (26; 46A, 46B);
wherein:
the free turbine is aft of the propulsor section (18);
the exhaust duct (32) includes an annular section (36) wrapping around the shaft (28) to form an annular outlet (25) into the free turbine (26; 46A, 46B), the annular section (36) isolating the shaft (28) from the high temperatures and pressures of the exhaust gas flow, and the annular outlet (25) aft of the propulsor section (18) communicating gas flow to drive the free turbine (26; 46A, 46B); and
the propulsor section (18) is mounted at an aft portion (54) of the aircraft fuselage (52).

2. The aircraft (10) as recited in claim 1, wherein the free turbine (26; 46A, 46B) comprises a radial inflow turbine (46A, 46B) and the outlet (52) of the exhaust duct (32) is disposed transverse to the radial inflow turbine (46A, 46B) to direct exhaust gas flow radially into the radial inflow turbine (46A, 46B).

3. The aircraft (10) as recited in claim 1, wherein the free turbine (26; 46A, 46B) comprises an axial inflow turbine (26) and the outlet (25) is disposed aft of the propulsor (18) and forward of the axial inflow turbine (26).

4. The aircraft (10) of claim 3, wherein the exhaust duct (32) includes an inflow section that communicates exhaust gases to the outlet (25), and the outlet (25) is annular and surrounds the shaft (28).

5. The aircraft (10) as recited in any preceding claim, wherein the exhaust duct (32) includes a turning portion (34) that turns exhaust gas flow radially inward to the free turbine (26; 46A, 46B).

6. The aircraft (10) as recited in claim 5, further comprising a bifurcation (38; 38A, 38B) that extends through a flow path of the propulsor (18) and the turning portion (34) is disposed within the bifurcation (38; 38A, 38B).

7. The aircraft (10) as recited in any preceding claim, wherein the core engine assembly (16A, 16B) is angled outward relative to a longitudinal axis (C) of the aircraft (10).

8. The aircraft (10) as recited in any preceding claim, wherein the gear system (35) is configured to drive the propulsor section (18) at a speed different than that of the free turbine (26; 46A, 46B).

9. The aircraft (10) as recited in any preceding claim, wherein the core engine assembly (16A, 16B) comprises a first core engine (16A) and a second core engine (16B) disposed within the aircraft (10) and the propulsor section (18) comprises a first propulsor (40A) driven by the first core engine (16A) and a second propulsor (40B) driven by the second core engine (16B).

10. The aircraft (10) as recited in claim 9, wherein the first core engine (16A) and the second core engine (16B) are each angled outward relative to a longitudinal axis (C) of the aircraft (10).

## Patentansprüche

1. Luftfahrzeug (10), umfassend:
eine Kerntriebwerksanordnung (16A, 16B), die innerhalb eines Luftfahrzeugrumpfes (52) getragen wird, wobei die Kerntriebwerksanordnung (16A, 16B) einen Verdichterabschnitt (20A, 20B) beinhaltet, der Luft zu einem Brennkammerabschnitt (22) durchlässt, in dem die Luft mit Brennstoff gemischt und gezündet wird, um einen energiereichen Gasstrom zu erzeugen, der sich durch einen Turbinenabschnitt (24A, 24B) hindurch ausdehnt;
einen Lufteinlass (12) innerhalb des Luftfahrzeugrumpfes (52), der Luft zu der Kerntriebwerksanordnung (16A, 16B) durchlässt;
einen Antriebsabschnitt (18) hinter der Kerntriebwerksanordnung (16A, 16B); und
eine Freistrahlturbine (26; 46A, 46B), die dazu konfiguriert ist, durch einen Gasstrom von der Kerntriebwerksanordnung (16A, 16B) angetrieben zu werden, wobei die Freistrahlturbine (26; 46A, 46B) ein Getriebesystem (35) durch eine Welle (28) antreibt und das Getriebesystem (35) ein entsprechendes Gebläse (40A, 40B) antreibt, wobei die Welle (28) entlang einer Gebläseachse (B2) angeordnet ist und an den Antriebsabschnitt (18) gekoppelt ist; und
eine Abgasleitung (32), die Abgase von der Kerntriebwerksanordnung (16A, 16B) zu der Freistrahlturbine (26; 46A, 46B) weiterleitet;
wobei:
die Freistrahlturbine hinter dem Antriebsabschnitt (18) liegt;
die Abgasleitung (32) einen ringförmigen Abschnitt (36) beinhaltet, der sich um die Welle (28) wickelt, um einen ringförmigen Auslass (25) in die Freistrahlturbine (26; 46A, 46B) auszubilden, wobei der ringförmige Abschnitt (36) die Welle (28) von den hohen Temperaturen und Drücken des Abgasstroms isoliert und wobei der ringförmige Auslass (25) hinter dem Antriebsabschnitt (18) einen Gasstrom durchlässt, um die Freistrahlturbine (26; 46A, 46B) anzutreiben; und
der Antriebsabschnitt (18) an einen hinteren Teil (54) des Luftfahrzeugrumpfes (52) montiert ist.

2. Luftfahrzeug (10) nach Anspruch 1, wobei die Freistrahlturbine (26; 46A, 46B) eine radiale Einströmturbine (46A, 46B) umfasst und der Auslass (52) der Abgasleitung (32) quer zu der radialen Einströmturbine (46A, 46B) angeordnet ist, um einen Abgasstrom radial in die radiale Einströmturbine (46A, 46B) zu leiten.

3. Luftfahrzeug (10) nach Anspruch 1, wobei die Freistrahlturbine (26; 46A, 46B) eine axiale Einströmturbine (26) umfasst und der Auslass (25) hinter dem Antrieb (18) und vor der axialen Einströmturbine (26) angeordnet ist.

4. Luftfahrzeug (10) nach Anspruch 3, wobei die Abgasleitung (32) einen Einströmabschnitt beinhaltet, der Abgase zu dem Auslass (25) durchlässt, und der Auslass (25) ringförmig ist und die Welle (28) umgibt.

5. Luftfahrzeug (10) nach einem der vorhergehenden Ansprüche, wobei die Abgasleitung (32) einen drehenden Teil (34) beinhaltet, der einen Abgasstrom radial einwärts zu der Freistrahlturbine (26; 46A, 46B) dreht.

6. Luftfahrzeug (10) nach Anspruch 5, ferner umfassend eine Verzweigung (38; 38A, 38B), die sich durch einen Strömungsweg des Antriebs (18) erstreckt, und wobei der drehende Teil (34) innerhalb der Verzweigung (38; 38A, 38B) angeordnet ist.

7. Luftfahrzeug (10) nach einem der vorhergehenden Ansprüche, wobei die Kerntriebwerksanordnung (16A, 16B) auswärts relativ zu einer Längsachse (C) des Luftfahrzeugs (10) gewinkelt ist.

8. Luftfahrzeug (10) nach einem der vorhergehenden Ansprüche, wobei das Getriebesystem (35) dazu konfiguriert ist, den Antriebsabschnitt (18) bei einer Drehzahl, die sich von jener der Freistrahlturbine (26; 46A, 46B) unterscheidet, anzutreiben.

9. Luftfahrzeug (10) nach einem der vorhergehenden Ansprüche, wobei die Kerntriebwerksanordnung (16A, 16B) ein erstes Kerntriebwerk (16A) und ein zweites Kerntriebwerk (16B), die innerhalb des Luftfahrzeugs (10) angeordnet sind, umfasst, und der Antriebsabschnitt (18) einen ersten Antrieb (40A), der durch das erste Kerntriebwerk (16A) angetrieben wird, und einen zweiten Antrieb (40B), der durch das zweite Kerntriebwerk (16B) angetrieben wird, umfasst.

10. Luftfahrzeug (10) nach Anspruch 9, wobei das erste Kerntriebwerk (16A) und das zweite Kerntriebwerk (16B) auswärts relativ zu einer Längsachse (C) des Luftfahrzeugs (10) gewinkelt sind.

## Revendications

1. Aéronef (10) comprenant :
un ensemble moteur central (16A, 16B) supporté à l'intérieur d'un fuselage d'aéronef (52), l'ensemble moteur central (16A, 16B) comportant une section de compresseur (20A, 20B) communiquant de l'air à une section de chambre de combustion (22) où l'air est mélangé avec du carburant et enflammé pour générer un écoulement de gaz à haute énergie qui est élargi à travers la section de turbine (24A, 24B) ;
une prise d'air (12) à l'intérieur du fuselage d'aéronef (52) communiquant de l'air à l'ensemble moteur central (16A, 16B) ;
une section de propulseur (18) à l'arrière de l'ensemble moteur central (16A, 16B) ; et
une turbine libre (26 ; 46A, 46B) conçue pour être entraînée par un écoulement de gaz depuis l'ensemble moteur central (16A, 16B), dans lequel la turbine libre (26 ; 46A, 46B) entraîne un système d'engrenage (35) à travers un arbre (28), et le système d'engrenage (35) entraîne une soufflante (40A, 40B) correspondante, l'arbre (28) étant disposé le long d'un axe de soufflante (B2) et couplé à la section de propulseur (18) ; et
un conduit d'échappement (32) acheminant des gaz d'échappement depuis l'ensemble moteur central (16A, 16B) vers la turbine libre (26 ; 46A, 46B) ;
dans lequel :
la turbine libre est à l'arrière de la section de propulseur (18) ;
le conduit d'échappement (32) comporte une section annulaire (36) s'enroulant autour de l'arbre (28) pour former une sortie annulaire (25) dans la turbine libre (26 ; 46A, 46B), la section annulaire (36) isolant l'arbre (28) des températures et pressions élevées de l'écoulement de gaz d'échappement, et la sortie annulaire (25) à l'arrière de la section de propulseur (18) communiquant l'écoulement de gaz pour entraîner la turbine libre (26 ; 46A, 46B) ; et
la section de propulseur (18) est montée au niveau d'une partie arrière (54) du fuselage d'aéronef (52).

2. Aéronef (10) selon la revendication 1, dans lequel la turbine libre (26 ; 46A, 46B) comprend une turbine d'admission radiale (46A, 46B) et la sortie (52) du conduit d'échappement (32) est disposée transversalement à la turbine d'admission radiale (46A, 46B) pour diriger l'écoulement de gaz d'échappement radialement dans la turbine d'admission radiale (46A, 46B).

3. Aéronef (10) selon la revendication 1, dans lequel la turbine libre (26 ; 46A, 46B) comprend une turbine d'admission axiale (26) et la sortie (25) est disposée à l'arrière du propulseur (18) et à l'avant de la turbine d'admission axiale (26) .

4. Aéronef (10) selon la revendication 3, dans lequel le conduit d'échappement (32) comporte une section d'admission qui communique des gaz d'échappement à la sortie (25), et la sortie (25) est annulaire et entoure l'arbre (28).

5. Aéronef (10) selon une quelconque revendication précédente, dans lequel le conduit d'échappement (32) comporte une partie tournante (34) qui fait tourner l'écoulement de gaz d'échappement radialement vers l'intérieur vers la turbine libre (26 ; 46A, 46B).

6. Aéronef (10) selon la revendication 5, comprenant en outre une bifurcation (38 ; 38A, 38B) qui s'étend à travers un trajet d'écoulement du propulseur (18) et la partie tournante (34) est disposée à l'intérieur de la bifurcation (38 ; 38A, 38B) .

7. Aéronef (10) selon une quelconque revendication précédente, dans lequel l'ensemble moteur central (16A, 16B) est incliné vers l'extérieur par rapport à un axe longitudinal (C) de l'aéronef (10).

8. Aéronef (10) selon une quelconque revendication précédente, dans lequel le système d'engrenage (35) est conçu pour entraîner la section de propulseur (18) à une vitesse différente de celle de la turbine libre (26 ; 46A, 46B).

9. Aéronef (10) selon une quelconque revendication précédente, dans lequel l'ensemble moteur central (16A, 16B) comprend un premier moteur central (16A) et un second moteur central (16B) disposés à l'intérieur de l'aéronef (10) et la section de propulseur (18) comprend un premier propulseur (40A) entraîné par le premier moteur central (16A) et un second propulseur (40B) entraîné par le second moteur central (16B).

10. Aéronef (10) selon la revendication 9, dans lequel le premier moteur central (16A) et le second moteur central (16B) sont chacun inclinés vers l'extérieur par rapport à un axe longitudinal (C) de l'aéronef (10).
